# EUROPÄISCHE PATENTSCHRIFT

(11) **EP 3 233 591 B1**
(45) Veröffentlichungstag und Bekanntmachung des Hinweises auf die Patenterteilung: **10.04.2019**
(21) Anmeldenummer: 15793817.6
(22) Anmeldetag: 11.11.2015
(51) Int. Cl.: B60S 1/40, B60S 1/38

(54) **ADAPTERVORRICHTUNG**
ADAPTER DEVICE
DISPOSITIF D'ADAPTATION

(30) Priorität: 19.12.2014 DE 102014226523
(43) Veröffentlichungstag der Anmeldung: 25.10.2017
(73) Patentinhaber: Robert Bosch GmbH, 70442 Stuttgart (DE)
(72) Erfinder: DEPONDT, Helmut, B-3370 Boutersem (BE)
(86) Internationale Anmeldenummer: PCT/EP2015/076339
(87) Internationale Veröffentlichungsnummer: WO 2016/096262

(56) Entgegenhaltungen:
- EP-A2- 2 505 440
- DE-A1-102010 052 315
- DE-A1-102012 015 983
- DE-A1-102013 103 279

## Beschreibung

### Stand der Technik

Es ist bereits eine Adaptervorrichtung mit einem Wischarmadapter, der ein Wischarmadapterelement und ein am Wischarmadapterelement verschiebbar gelagertes Sicherungselement umfasst, und mit einem Wischblattadapter, der ein Verbindungselement umfasst, wobei das Verbindungselement dazu vorgesehen ist, bei einer Montage in das Wischarmadapterelement eingeschoben zu werden, vorgeschlagen worden.

Aus der DE 10 2010 052 315 A1 ist eine Adaptervorrichtung mit den Merkmalen des Oberbegriffs des Anspruchs 1 bekannt. Weiterer Stand der Technik wird durch die DE 10 2013 013 279 A1 und die EP 2 505 440 A2 gebildet.

### Offenbarung der Erfindung

Die Erfindung geht aus von einer Adaptervorrichtung mit einem Wischarmadapter, der ein Wischarmadapterelement und ein am Wischarmadapterelement verschiebbar gelagertes Sicherungselement umfasst, und mit einem Wischblattadapter, der ein Verbindungselement umfasst, wobei das Verbindungselement dazu vorgesehen ist, bei einer Montage in das Wischarmadapterelement eingeschoben zu werden.

Es wird vorgeschlagen, dass der Wischblattadapter zumindest ein Rastmittel aufweist, das dazu vorgesehen ist, bei der Montage mit dem Sicherungselement des Wischarmadapters verrastet zu werden. Dadurch kann eine besonders einfache Montage des Wischarmadapters mit dem Wischblattadapter erreicht werden. Ferner kann eine besonders hohe Betriebssicherheit erreicht werden. Unter einem "Wischarmadapter" soll in diesem Zusammenhang insbesondere ein Adapter verstanden werden, der einen Kontaktbereich zu einem Wischarmbauteil aufweist und mit dem Wischarmbauteil unverlierbar verbunden und dazu vorgesehen ist, einen Kopplungsbereich lungsbereich des Wischarmbauteils für eine Kopplung und/oder Kontaktierung mit einem Wischblattadapter bereitzustellen.

Unter einem "Wischblattadapter" soll in diesem Zusammenhang insbesondere ein Adapter verstanden werden, der einen Kontaktbereich zu einem Wischblattbauteil aufweist und mit dem Wischblattbauteil unverlierbar verbunden und dazu vorgesehen ist, einen Kopplungsbereich des Wischblattbauteils für eine Kopplung und/oder Kontaktierung mit einem Wischarmadapter bereitzustellen. Unter einem "Wischarmadapterelement" soll in diesem Zusammenhang insbesondere ein Element verstanden werden, das einen Grundkörper des Wischarmadapters ausbildet. Das Wischarmadapterelement ist mit einer Wischstange vercrimpt oder bevorzugt einstückig mit der Wischstange ausgebildet. Bevorzugt weist das Wischarmadapterelement ein zumindest im Wesentlichen U-förmiges Profil auf.

Vorteilhaft ist das Sicherungselement am Wischarmadapterelement linear verschiebbar gelagert. Das Sicherungselement ist vorzugsweise dazu vorgesehen, den Wischblattadapter mit dem Wischarmadapter verliersicher zu verbinden. Bevorzugt ist das Sicherungselement dazu vorgesehen, einen Anschlag in eine wischlippenzugewandte Richtung für das Verbindungselement zu bilden. Unter einem "Rastmittel" soll in diesem Zusammenhang insbesondere ein federelastisches Mittel zur Herstellung einer Rastverbindung verstanden werden, das dazu vorgesehen ist, bei einer Montage aus einer Ausgangsposition elastisch ausgelenkt zu werden.

Vorzugsweise ist das zumindest eine Rastmittel dazu vorgesehen, bei einem Erreichen einer Montageposition zurück in die Ausgangsposition bewegt zu werden. Bevorzugt bildet das zumindest eine Rastmittel eine Rastzunge aus. Unter "vorgesehen" soll insbesondere speziell ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

In einer weiteren Ausgestaltung der Erfindung wird vorgeschlagen, dass das zumindest eine Rastmittel am Verbindungselement angeordnet ist. Dadurch kann der Wischblattadapter vorteilhaft besonders kompakt ausgebildet sein. Weiterhin vorteilhaft kann das Rastmittel dadurch optisch besonders unauffällig angeordnet werden. Vorteilhaft ist das zumindest eine Rastmittel einstückig mit dem Verbindungselement ausgebildet. Unter "einstückig" soll insbesondere stoffschlüssig verbunden, wie beispielsweise durch einen Schweißprozess und/oder Klebeprozess usw., und besonders vorteilhaft angeformt verstanden werden, wie durch die Herstellung aus einem Guss und/oder durch die Herstellung in einem Ein- oder Mehrkomponentenspritzverfahren.

Weiterhin wird vorgeschlagen, dass das zumindest eine Rastmittel in eine Wischrichtung elastisch auslenkbar ausgebildet ist. Dadurch kann eine besonders betriebssichere Rastverbindung hergestellt werden. Insbesondere ist das zumindest eine Rastmittel senkrecht zu einer Montagerichtung des Wischarmadapters auslenkbar. Die Montagerichtung erstreckt sich vorteilhaft zumindest im Wesentlichen senkrecht zu einer Wischrichtung und zumindest im Wesentlichen senkrecht zu einer Längserstreckungsrichtung des Wischarmadapters. Ferner verläuft die Montagerichtung in einem betriebsbereiten Zustand zumindest im Wesentlichen senkrecht zu einer zu wischenden Fahrzeugscheibe.

Nach der Erfindung wird vorgeschlagen, dass das zumindest eine Rastmittel ein freies, auslenkbares Ende umfasst, das in eine Montagerichtung des Wischarmadapters ausgerichtet ist. Dadurch kann eine Beschädigung des zumindest einen Rastmittels bei einer Montage vorteilhaft vermieden werden.

Eine besonders komfortable Montage kann erreicht werden, wenn das zumindest eine Rastmittel einen Widerhaken umfasst, der dazu vorgesehen ist, bei einem Aufsetzen des Wischarmadapters auf den Wischblattadapter ausgelenkt zu werden. Bevorzugt weist der Widerhaken in einer unausgelenkten Ausgangsposition eine senkrecht zur Montagerichtung verlaufende Anschlagfläche auf.

Des Weiteren wird vorgeschlagen, dass der Wischblattadapter zumindest zwei Rastmittel aufweist, die dazu vorgesehen sind, mit dem Sicherungselement des Wischarmadapters verrastet zu werden. Dadurch kann eine Betriebssicherheit weiter erhöht werden.

Zudem wird vorgeschlagen, dass der Wischblattadapter zumindest zwei Rastmittel aufweist, die mit einem gleichen Abstand zu einer Schwenkachse des Verbindungselements angeordnet sind und die dazu vorgesehen sind, mit dem Sicherungselement des Wischarmadapters verrastet zu werden. Dadurch kann eine Kraftverteilung innerhalb des Wischblattadapters vorteilhaft gleichmäßig verteilt werden. Die Schwenkachse verbindet das Verbindungselement vorzugsweise gelenkig mit einem Grundkörper des Wischblattadapters.

Weiterhin wird vorgeschlagen, dass der Wischblattadapter zumindest vier Rastmittel aufweist, die dazu vorgesehen sind, mit dem Sicherungselement des Wischarmadapters verrastet zu werden, wobei zwei der zumindest vier Rastmittel an einer ersten Seitenwandung des Verbindungselements angeordnet sind und zwei weitere der zumindest vier Rastmittel an einer zweiten Seitenwandung des Verbindungselements angeordnet sind. Dadurch kann eine Betriebssicherheit vorteilhaft weiter erhöht werden. Vorzugsweise verlaufen die erste Seitenwandung und die zweite Seitenwandung parallel zueinander. Weiterhin vorteilhaft sind die erste Seitenwandung und die zweite Seitenwandung durch eine Deckwandung miteinander verbunden. Zusätzlich wird vorgeschlagen, dass jeweils zwei Rastmittel der zumindest vier Rastmittel in Längserstreckungsrichtung betrachtet auf einer gleichen Höhe angeordnet sind.

Ferner wird vorgeschlagen, dass das Sicherungselement zumindest eine Ausnehmung aufweist, die dazu vorgesehen ist, das zumindest eine Rastmittel in einer Freigabestellung freizugeben. Dadurch kann eine besonders einfache Demontage des Wischarmadapters vom Wischblattadapter erreicht werden. Bevorzugt weist das Sicherungselement zumindest eine für jedes Rastmittel zugeordnete Ausnehmung auf.

Zudem wird vorgeschlagen, dass das Sicherungselement eine vordere Anschlagfläche und eine hintere Anschlagfläche ausbildet, die in einem montierten Zustand zu einer Anlage am Verbindungselement vorgesehen sind, wobei ein Abstand zwischen der vorderen Anschlagfläche und der hinteren Anschlagfläche einer maximalen Längserstreckung des Verbindungselements entspricht. Dadurch kann eine besonders einfache Montage der Adaptervorrichtung durch einen Endbenutzer durchgeführt werden.

Die erfindungsgemäße Adaptervorrichtung soll hierbei nicht auf die oben beschriebene Anwendung und Ausführungsform beschränkt sein. Insbesondere kann die erfindungsgemäße Adaptervorrichtung zu einer Erfüllung einer hierin beschriebenen Funktionsweise eine von einer hierin genannten Anzahl von einzelnen Elementen, Bauteilen und Einheiten abweichende Anzahl aufweisen.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine erfindungsgemäße Adaptervorrichtung vor einer Montage in einer perspektivischen Ansicht,
- Fig. 2: die Adaptervorrichtung nach Figur 1 in einem vormontierten Zustand in einem Teilschnitt,
- Fig. 3: die Adaptervorrichtung nach Figur 1 während eines Montagevorgangs in einem perspektivischen Teilschnitt und
- Fig. 4: die Adaptervorrichtung nach Figur 1 nach einem Montagevorgang in einem perspektivischen Teilschnitt.

### Beschreibung des Ausführungsbeispiels

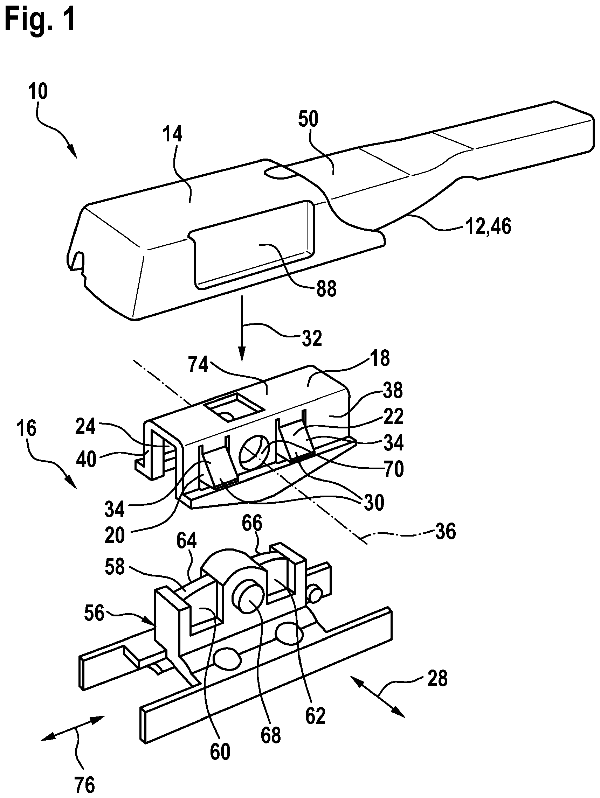

In der Figur 1 ist eine Adaptervorrichtung für ein Wischblatt 44 mit einem Wischarmadapter 10 und mit einem Wischblattadapter 16 gezeigt. Der Wischarmadapter 10 weist ein Wischarmadapterelement 12 auf. Das Wischarmadapterelement 12 weist ein U-förmiges Profil auf. Das Wischarmadapterelement 12 weist zwei Seitenflansche 46, 48 auf, die deckseitig mit einem flächigen Steg 50 verbunden sind. Die Seitenflansche 46, 48 verlaufen parallel zueinander. Der Steg 50 verläuft senkrecht zu den Seitenflanschen 46, 48. Die Seitenflansche 46, 48 weisen jeweils zwei Ausnehmungen 52, 54 auf. Die Ausnehmungen 52, 54 durchdringen die Seitenflansche 46, 48 vollständig. Ferner öffnen die Ausnehmungen 52, 54 die Seitenflansche 46, 48 in eine wischblattadapterzugewandte Richtung.

Der Wischarmadapter 10 umfasst ferner ein Sicherungselement 14. Das Sicherungselement 14 ist verschiebbar am Wischarmadapterelement 12 gelagert. Genauer gesagt ist das Sicherungselement 14 am Wischarmadapterelement 12 linear verschiebbar gelagert. Das Sicherungselement 14 weist ein U-förmiges Profil auf. Das Sicherungselement 14 übergreift das Wischarmadapterelement 12. Dabei überdeckt das Sicherungselement 14 die Seitenflansche 46, 48 und den Steg 50 des Wischarmadapterelements 12 zumindest teilweise.

Die Adaptervorrichtung weist ferner den Wischblattadapter 16 auf. Der Wischblattadapter 16 ist zur lösbaren Kopplung mit dem Wischarmadapter 10 vorgesehen. Der Wischblattadapter 16 ist unverlierbar mit dem Wischblatt 44 verbunden. Das Wischblatt 44 bildet ein Flachwischblatt aus. Der Wischblattadapter 16 weist einen Grundkörper 56 auf. Der Grundkörper 56 ist fest mit dem Wischblatt 44 verbunden, beispielsweise durch eine Schweißverbindung, insbesondere eine Ultraschallschweißverbindung, oder auch durch eine Rastverbindung. Der Grundkörper 56 weist eine senkrecht zu einer Wischrichtung 28 verlaufende Haltewandung 58 auf. Die Wischrichtung 28 verläuft senkrecht zu einer Längserstreckungsrichtung 76 des Wischarmadapters 10. Ferner verläuft die Wischrichtung 28 parallel zu einer zu wischenden Fahrzeugscheibe.

In der Haltewandung 58 sind vier Ausnehmungen 60, 62, 64, 66 angeordnet. Die Ausnehmungen 60, 62, 64, 66 dringen teilweise in die Haltewandung 58 ein. Der Wischblattadapter 16 weist ferner einen Lagerbolzen 68 auf. Der Lagerbolzen 68 ist am Grundkörper 56 angeordnet. Der Lagerbolzen 68 ist einstückig mit dem Grundkörper 56 ausgebildet. Der Lagerbolzen 68 ist zylinderförmig ausgebildet. Eine Zylinderachse des Lagerbolzens 68 verläuft parallel zur Wischrichtung 28.

Der Wischblattadapter 16 umfasst ferner ein Verbindungselement 18. Das Verbindungselement 18 ist dazu vorgesehen, bei einer Montage in das Wischarmadapterelement 12 eingeschoben zu werden. Der Wischblattadapter 16 weist vier Rastmittel 20, 22, 24, 26 auf. Die Rastmittel 20, 22, 24, 26 sind dazu vorgesehen, bei der Montage mit dem Sicherungselement 14 des Wischarmadapters 10 verrastet zu werden. Die Rastmittel 20, 22, 24, 26 sind am Verbindungselement 18 angeordnet. Die Rastmittel 20, 22, 24, 26 sind einstückig mit dem Verbindungselement 18 ausgebildet. Die Rastmittel 20, 22, 24, 26 sind aus einer Ausgangsposition heraus federelastisch auslenkbar ausgebildet. Die Rastmittel 20, 22, 24, 26 sind aus einem Kunststoff ausgebildet. Die Rastmittel 20, 22, 24, 26 bilden jeweils eine Rastzunge aus.

Die Rastmittel 20, 22, 24, 26 sind in Wischrichtung 28 elastisch auslenkbar ausgebildet. Die Rastmittel 20, 22, 24, 26 umfassen jeweils ein freies, auslenkbares Ende 30, das jeweils in eine Montagerichtung 32 des Wischarmadapters 10 ausgerichtet ist. Die Rastmittel 20, 22, 24, 26 umfassen jeweils einen Widerhaken 34, der dazu vorgesehen ist, bei einem Aufsetzen des Wischarmadapters 10 auf den Wischblattadapter 16 ausgelenkt zu werden. Der Widerhaken 34 weist in einer unausgelenkten Ausgangsposition eine senkrecht zur Montagerichtung 32 verlaufende Anschlagfläche 72 auf.

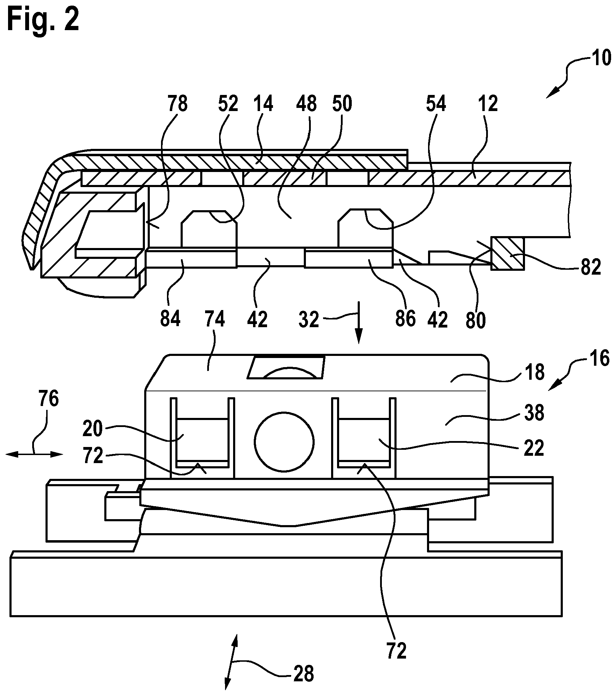

In der Figur 2 ist der Grundkörper 56 mit dem Verbindungselement 18 vormontiert. Das Verbindungselement 18 weist eine Lagerausnehmung 70 auf. Der Lagerbolzen 68 greift in die Lagerausnehmung 70 ein. Das Verbindungselement 18 ist im vormontierten Zustand um eine Schwenkachse 36 schwenkbar mit dem Grundkörper 56 verbunden (Figur 2). Jeweils zwei der vier Rastmittel 20, 22, 24, 26 sind mit einem gleichen Abstand zur Schwenkachse 36 des Verbindungselements 18 angeordnet. Von den vier Rastmitteln 20, 22, 24, 26 sind zwei Rastmittel 20, 22 an einer ersten Seitenwandung 38 des Verbindungselements 18 angeordnet. Zwei weitere Rastmittel 24, 26 der vier Rastmittel 20, 22, 24, 26 sind an einer zweiten Seitenwandung 40 des Verbindungselements 18 angeordnet.

Von den vier Rastmitteln 20, 22, 24, 26 bewegen sich jeweils zwei Rastmittel 20, 22 auf die anderen zwei Rastmittel 24, 26 bei einem Auslenken während eines Montagevorgangs aufeinander zu. Die erste Seitenwandung 38 und die zweite Seitenwandung 40 verlaufen parallel zueinander. Die erste Seitenwandung 38 und die zweite Seitenwandung 40 sind durch eine Deckwandung 74 miteinander verbunden. Die Deckwandung 74 verläuft in einem rechten Winkel zu den Seitenwandungen 38, 40. Das Verbindungselement 18 weist ein U-förmiges Profil auf.

Das Sicherungselement 14 bildet eine vordere Anschlagfläche 78 aus. Die vordere Anschlagfläche 78 erstreckt sich senkrecht zur Längserstreckungsrichtung 76 des Wischarmadapters 10. Ferner bildet das Sicherungselement 14 eine hintere Anschlagfläche 80 aus. Die hintere Anschlagfläche 80 erstreckt sich senkrecht zur Längserstreckungsrichtung 76 des Wischarmadapters 10. Die vordere Anschlagfläche 78 und die hintere Anschlagfläche 80 sind einander zugewandt. Ein Abstand zwischen der vorderen Anschlagfläche 78 und der hinteren Anschlagfläche 80 entspricht einer maximalen Längserstreckung des Verbindungselements 18. Bei einem Einschieben des Verbindungselements 18 in den Wischarmadapter 10 liegt das Verbindungselement 18 in Längserstreckungsrichtung 76 betrachtet formschlüssig am Sicherungselement 14 an. Das Sicherungselement 14 ist in einem montierten Zustand über Rastelemente 82 mit dem Wischarmadapterelement 12 in Längserstreckungsrichtung 76 formschlüssig fixiert.

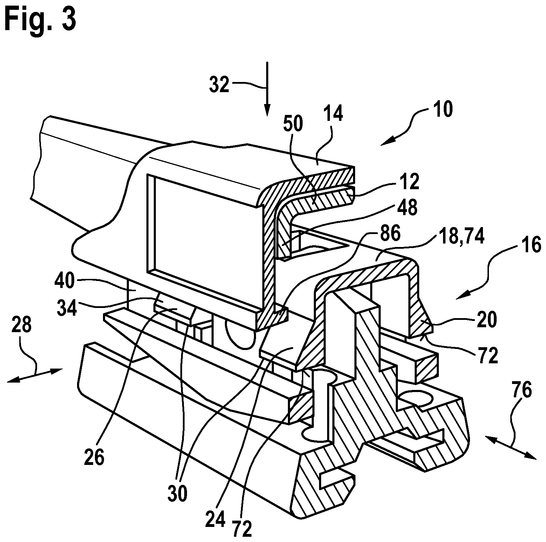

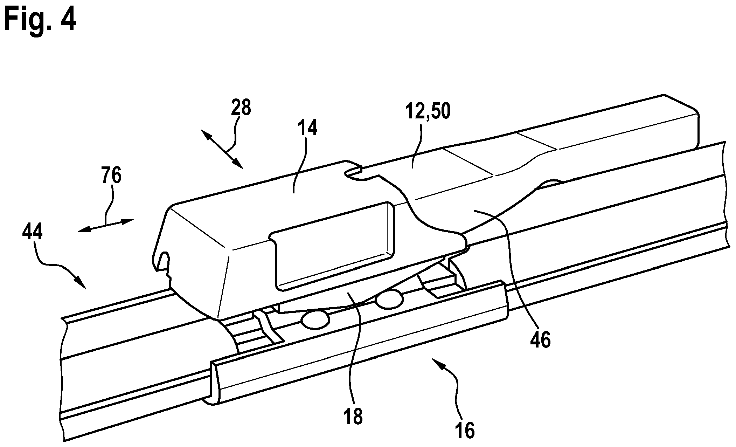

Das Sicherungselement 14 bildet in einem montierten Zustand einen Anschlag in eine wischlippenzugewandte Richtung für das Verbindungselement 18. Hierzu weist das Sicherungselement 14 zwei Schenkel 84, 86 auf. Die Schenkel 84, 86 erstrecken sich von einer wischblattadapterzugewandten Kante des Sicherungselements 14 senkrecht zu Seitenwandungen 88 des Sicherungselements 14. Wie in der Figur 3 gezeigt, lenken die Schenkel 84, 86 die Rastmittel 20, 22, 24, 26 bei der Montage aus. Bei einem Erreichen einer Endmontageposition schnappen die Rastmittel 20, 22, 24, 26 zurück in die Ausgangsposition (Figur 4). Die Rastmittel 20, 22, 24, 26 sind in der Endmontageposition unausgelenkt. Die jeweilige Anschlagfläche 72 der Rastmittel 20, 22, 24, 26 liegt an den Schenkeln 84, 86 des Sicherungselements 14 an. Ein Lösen des Wischblattadapters 16 vom Wischarmadapter 10 ist somit vermieden.

Wie in der Figur 2 gezeigt, weist das Sicherungselement 14 zumindest eine Ausnehmung 42 auf, die dazu vorgesehen ist, die Rastmittel 20, 22, 24, 26 in einer Freigabestellung freizugeben. Genauer gesagt weist das Sicherungselement 14 vier Ausnehmungen 42 auf, von denen hier lediglich zwei Ausnehmungen 42 dargestellt sind. Die Ausnehmungen 42 sind in den Schenkeln 84, 86 angeordnet. Jeder Schenkel 84, 86 weist dabei zwei Ausnehmungen 42 auf. Die Ausnehmungen 42 sind in Längserstreckungsrichtung 76 versetzt zu einem Bereich angeordnet, in dem die Rastmittel 20, 22, 24, 26 im montierten Zustand auf den Schenkeln 84, 86 aufliegen.

Zum Lösen der Verbindung zwischen dem Wischblattadapter 16 und dem Wischarmadapter 10 wird eine Freigabestellung eingenommen. Das Sicherungselement 14 wird hierzu relativ zum Wischarmadapter 10 in Längserstreckungsrichtung 76 verschoben. Die Ausnehmungen 42 gelangen in Deckung mit den Rastmitteln 20, 22, 24, 26. Die Rastmittel 20, 22, 24, 26 liegen somit nicht länger auf den Schenkeln 84, 86 auf. Eine Bewegung des Wischarmadapters 10 relativ zum Wischblattadapter 16 entgegen der Montagerichtung 32 ist dadurch möglich. Eine Demontage der Adaptervorrichtung kann somit erfolgen. Nach erfolgter Demontage wird das Sicherungselement 14 aus der Freigabestellung wieder zurück in Längserstreckungsrichtung 76 verschoben, wodurch eine erneute Montage des Wischblattadapters 16 am Wischarmadapter 10 erfolgen kann.

## Patentansprüche

1. Adaptervorrichtung mit einem Wischarmadapter (10), der ein Wischarmadapterelement (12) und ein am Wischarmadapterelement (12) verschiebbar gelagertes Sicherungselement (14) umfasst, und mit einem Wischblattadapter (16), der ein Verbindungselement (18) umfasst, wobei das Verbindungselement (18) dazu vorgesehen ist, bei einer Montage in das Wischarmadapterelement (12) eingeschoben zu werden, wobei der Wischblattadapter (16) zumindest ein Rastmittel (20) aufweist, das dazu vorgesehen ist, bei der Montage mit dem Sicherungselement (14) des Wischarmadapters (10) verrastet zu werden, **dadurch gekennzeichnet, dass** das zumindest eine Rastmittel (20) ein freies, auslenkbares Ende (30) umfasst, das in eine Montagerichtung (32) des Wischarmadapters (10) ausgerichtet ist.

2. Adaptervorrichtung nach Anspruch 1, **dadurch gekennzeichnet, dass** das zumindest eine Rastmittel (20) am Verbindungselement (18) angeordnet ist.

3. Adaptervorrichtung nach Anspruch 1 oder 2, **dadurch gekennzeichnet, dass** das zumindest eine Rastmittel (20) in eine Wischrichtung (28) elastisch auslenkbar ausgebildet ist.

4. Adaptervorrichtung nach einem der vorhergehenden Ansprüche, **dadurch gekennzeichnet, dass** das zumindest eine Rastmittel (20) einen Widerhaken (34) umfasst, der dazu vorgesehen ist, bei einem Aufsetzen des Wischarmadapters (10) auf den Wischblattadapter (16) ausgelenkt zu werden.

5. Adaptervorrichtung nach einem der vorhergehenden Ansprüche, **dadurch gekennzeichnet, dass** der Wischblattadapter (16) zumindest zwei Rastmittel (20, 22) aufweist, die dazu vorgesehen sind, mit dem Sicherungselement (14) des Wischarmadapters (10) verrastet zu werden.

6. Adaptervorrichtung nach einem der vorhergehenden Ansprüche, **dadurch gekennzeichnet, dass** der Wischblattadapter (16) zumindest zwei Rastmittel (20, 22) aufweist, die mit einem gleichen Abstand zu einer Schwenkachse (36) des Verbindungselements (18) angeordnet sind und die dazu vorgesehen sind, mit dem Sicherungselement (14) des Wischarmadapters (10) verrastet zu werden.

7. Adaptervorrichtung nach einem der vorhergehenden Ansprüche, **dadurch gekennzeichnet, dass** der Wischblattadapter (16) zumindest vier Rastmittel (20, 22, 24, 26) aufweist, die dazu vorgesehen sind, mit dem Sicherungselement (14) des Wischarmadapters (10) verrastet zu werden, wobei zwei der zumindest vier Rastmittel (20, 22, 24, 26) an einer ersten Seitenwandung (38) des Verbindungselements (18) angeordnet sind und zwei weitere der zumindest vier Rastmittel (20, 22, 24, 26) an einer zweiten Seitenwandung (40) des Verbindungselements (18) angeordnet sind.

8. Adaptervorrichtung nach einem der vorhergehenden Ansprüche, **dadurch gekennzeichnet, dass** das Sicherungselement (14) zumindest eine Ausnehmung (42) aufweist, die dazu vorgesehen ist, das zumindest eine Rastmittel (20, 22, 24, 26) in einer Freigabestellung freizugeben.

9. Adaptervorrichtung nach einem der vorhergehenden Ansprüche, **dadurch gekennzeichnet, dass** das Sicherungselement (14) eine vordere Anschlagfläche (78) und eine hintere Anschlagfläche (80) ausbildet, die in einem montierten Zustand zu einer Anlage am Verbindungselement (18) vorgesehen sind, wobei ein Abstand zwischen der vorderen Anschlagfläche (78) und der hinteren Anschlagfläche (80) einer maximalen Längserstreckung des Verbindungselements (18) entspricht.

## Claims

1. Adapter device with a wiper arm adapter (10) which comprises a wiper arm adapter element (12) and a securing element (14), which is mounted displaceably on the wiper arm adapter element (12), and with a wiper blade adapter (16) which comprises a connecting element (18), wherein the connecting element (18) is provided in order, during installation, to be pushed into the wiper arm adapter element (12), wherein the wiper blade adapter (16) has at least one latching means (20) which is provided in order, during installation, to be latched to the securing element (14) of the wiper arm adapter (10), **characterized in that** the at least one latching means (20) comprises a free deflectable end (30) which is oriented in an installation direction (32) of the wiper arm adapter (10).

2. Adapter device according to Claim 1, **characterized in that** the at least one latching means (20) is arranged on the connecting element (18).

3. Adapter device according to Claim 1 or 2, **characterized in that** the at least one latching means (20) is designed to be elastically deflectable in a wiping direction (28).

4. Adapter device according to one of the preceding claims, **characterized in that** the at least one latching means (20) comprises a barb (34) which is provided in order to be deflected when the wiper arm adapter (10) is placed onto the wiper blade adapter (16).

5. Adapter device according to one of the preceding claims, **characterized in that** the wiper blade adapter (16) has at least two latching means (20, 22) which are provided in order to be latched to the securing element (14) of the wiper arm adapter (10).

6. Adapter device according to one of the preceding claims, **characterized in that** the wiper blade adapter (16) has at least two latching means (20, 22) which are arranged at an identical distance from a pivot axis (36) of the connecting element (18) and which are provided in order to be latched to the securing element (14) of the wiper arm adapter (10).

7. Adapter device according to one of the preceding claims, **characterized in that** the wiper blade adapter (16) has at least four latching means (20, 22, 24, 26) which are provided in order to be latched to the securing element (14) of the wiper arm adapter (10), wherein two of the at least four latching means (20, 22, 24, 26) are arranged on a first side wall (38) of the connecting element (18) and two further of the at least four latching means (20, 22, 24, 26) are arranged on a second side wall (40) of the connecting element (18).

8. Adapter device according to one of the preceding claims, **characterized in that** the securing element (14) has at least one recess (42) which is provided to release the at least one latching means (20, 22, 24, 26) in a release position.

9. Adapter device according to one of the preceding claims, **characterized in that** the securing element (14) forms a front stop surface (78) and a rear stop surface (80), which stop surfaces, in a fitted state, are provided for contact on the connecting element (18), wherein a distance between the front stop surface (78) and the rear stop surface (80) corresponds to a maximum longitudinal extent of the connecting element (18).

## Revendications

1. Ensemble d'adaptateur présentant
un adaptateur (10) de bras d'essuie-glace qui comporte un élément (12) d'adaptateur de bras d'essuie-glace et un élément de blocage (14) monté à coulissement sur l'élément (12) d'adaptateur de bras d'essuie-glace et
un adaptateur (16) de balai d'essuie-glace qui comporte un élément de liaison (18),
l'élément de liaison (18) étant prévu pour être inséré dans l'élément (12) d'adaptateur de bras d'essuie-glace lors d'un montage,
l'adaptateur (16) de balai d'essuie-glace présentant au moins un moyen d'encliquetage (20) prévu pour être encliqueté sur l'élément de blocage (14) de l'adaptateur (10) de bras d'essuie-glace lors du montage,
**caractérisé en ce que**
le ou les moyens d'encliquetage (20) comporte(nt) une extrémité libre pouvant être déviée (30) orientée suivant une direction de montage (32) de l'adaptateur (10) de bras d'essuie-glace.

2. Ensemble d'adaptateur selon la revendication 1, **caractérisé en ce que** le ou les moyens d'encliquetage (20) sont disposés sur l'élément de liaison (18).

3. Ensemble d'adaptateur selon la revendication 1 ou 2, **caractérisé en ce que** le ou les moyens d'encliquetage (20) sont réalisés de manière à pouvoir être déviés élastiquement dans une direction de balayage (28).

4. Ensemble d'adaptateur selon l'une des revendications précédentes, **caractérisé en ce que** le ou les moyens d'encliquetage (20) comportent un contre-crochet (34) prévu pour être dévié lors du placement de l'adaptateur (10) de bras d'essuie-glace sur l'adaptateur (16) de balai d'essuie-glace.

5. Ensemble d'adaptateur selon l'une des revendications précédentes, **caractérisé en ce que** l'adaptateur (16) de balai d'essuie-glace présente au moins deux moyens d'encliquetage (20, 22) prévus pour être encliquetés sur l'élément de blocage (14) de l'adaptateur (10) de bras d'essuie-glace.

6. Ensemble d'adaptateur selon l'une des revendications précédentes, **caractérisé en ce que** l'adaptateur (16) de balai d'essuie-glace présente au moins deux moyens d'encliquetage (20, 22) disposés à une même distance par rapport à un axe de pivotement (36) de l'élément de liaison (18) et prévus pour être encliquetés sur l'élément de blocage (14) de l'adaptateur (10) de bras d'essuie-glace.

7. Ensemble d'adaptateur selon l'une des revendications précédentes, **caractérisé en ce que** l'adaptateur (16) de balai d'essuie-glace présente au moins quatre moyens d'encliquetage (20, 22, 24, 26) prévus pour être encliquetés sur l'élément de blocage (14) de l'adaptateur (10) de bras d'essuie-glace, deux des au moins quatre moyens d'encliquetage (20, 22, 24, 26) étant disposés sur une première paroi latérale (38) de l'élément de liaison (18) et deux autres des au moins quatre moyens d'encliquetage (20, 22, 24, 26) étant disposés sur une deuxième paroi latérale (40) de l'élément de liaison (18).

8. Ensemble d'adaptateur selon l'une des revendications précédentes, **caractérisé en ce que** l'élément de blocage (14) présente au moins une découpe (42) prévue pour libérer le ou les moyens d'encliquetage (20, 22, 24, 26) dans une position de libération.

9. Ensemble d'adaptateur selon l'une des revendications précédentes, **caractérisé en ce que** l'élément de blocage (14) forme une surface (78) de butée avant et une surface (80) de butée arrière prévues pour se placer contre l'élément de liaison (18) en situation montée, une distance entre la surface (78) de butée avant et la surface (80) de butée arrière correspondant à une extension longitudinale maximale de l'élément de liaison (18).
